(19) Europäisches Patentamt
European Patent Office
Office européen des brevets

(11) Publication number : **0 451 434 B1**

(12) # EUROPEAN PATENT SPECIFICATION

(45) Date of publication of patent specification : **03.08.94 Bulletin 94/31**

(21) Application number : **90870057.8**

(22) Date of filing : **13.04.90**

(51) Int. Cl.[5] : **C02F 1/66,** C02F 5/02, C02F 5/08, C02F 5/10, C02F 5/12, C02F 5/14, C23F 11/08, C23F 11/167, C02F 1/50, C02F 1/42, C02F 1/44

(54) **Method for controlling deposits and corrosion in water treatment applications.**

(43) Date of publication of application : **16.10.91 Bulletin 91/42**

(45) Publication of the grant of the patent : **03.08.94 Bulletin 94/31**

(84) Designated Contracting States : **AT BE CH DE DK ES FR GB GR IT LI LU NL SE**

(56) References cited :
**EP-A- 0 102 401**
**EP-A- 0 302 522**
**AT-A- 313 200**
**DE-A- 2 030 430**
**DE-A- 3 042 492**
**FR-A- 2 509 714**
**GB-A- 665 198**
**LU-A- 56 096**
**US-A- 4 517 097**

(73) Proprietor : **DENAC N.V.**
**Smallandlaan 1 - 3**
**Industriepark Hoboken**
**B-2710 Antwerpen (Hoboken) (BE)**

(72) Inventor : **Thevissen, Peter**
**Mechelsesteenweg 693**
**B-3020 Herent (BE)**

(74) Representative : **Ellis-Jones, Patrick George Armine et al**
**J.A. KEMP & CO.**
**14 South Square**
**Gray's Inn**
**London WC1R 5LX (GB)**

EP 0 451 434 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The most important scale forming reaction in water treatment applications is the calciumcarbonate formation by the well known reaction :

$$Ca^{2+} + CO_3^{2-} \rightarrow CaCO_3 \downarrow \qquad (1)$$

Carbonate can be formed in the water, such as cooling water, under the influence of heat by :

$$2\ HCO_3 \rightleftarrows CO_3^{2-} + CO_2 \uparrow + H_2O \qquad (2)$$

If carbondioxide can escape from the water the equilibrium reaction (2) is shifted to the right, with the result that carbonate ions are generated.

The most common practice to avoid excessive carbonate formation is the dosage of strong mineral acids such as hydrogen sulfate or hydrogen chloride.

Still another method in use today is to not control pH at all : calciumcarbonate formation is then controlled by the addition of calciumcarbonate scale inhibition formulations with high performance. In cooling water applictions this method is becoming very popular today, through the development of all organic formulations.

Both methods have their inconveniences :

- dosage of strong mineral acids makes the water very corrosive because bicarbonate ions are eliminated from the water and replaced by sulfate and/or chloride ions. To control the corrosion, water treatment companies have developed a lot of corrosion inhibitors: formulations which contain one or more of the following chemicals: chromate, nitrite, silicate, phosphorus containing chemicals, zinc, molybdate, polymers. These formulations may contain besides these chemicals other products as topping agents such as surfactants, iron complexants etc...
- Water treatment without pH regulation has the advantage that the water is less corrosive than in the former case. As a consequence quence lower amounts of corrosion inhibitors or less toxic chemicals can be used. The disadvantage of not using a pH regulation however is that cycles of concentration are most of the time rather limited: today a Ryznar Stability Index of not lower than about 3 is achievable.

Another, but not widely used method, is the injection of carbon dioxide in the water, whereby equilibrium (2) is shifted to the left.

Dosage of carbondioxide is a less common practice: an extensive description of this practice for cooling water applications is given by E. Wahnschaffe (VGB Speisewassertagung, p. 21-27 (1970)). To suppress calciumcarbonate formation in an effective way, pH must be regulated well below 8.3. In that case carbondioxide consumption is excessive and the corrosion tendency of the water is becoming a serious problem.

FR-A-2509714 describes a method of treating an aqueous system for reducing scale formation by adding to the system an antiscaling agent and carbon dioxide at pH between 8.7 and 9.3 and maintaining the P-alkalinity between 20 and 90 ppm.

We now surprisingly found, according to the present invention, that regulating the pH of the system to a value between 7 and 9 using carbon dioxide and maintaining the TAC value (m-alkalinity) at 500 to 1000 ppm expressed as calcium carbonate, combined with one or more other water treatment chemicals gives better overall performance of water treatment programs than in the case where the same water treatment chemicals are used together with strong mineral acid pH regulation or no pH regulation : corrosion and scaling can be eliminated almost completely. Lower dosages of toxic water treatment chemicals are needed than in the classical treatment modes; moreover most of the time waters with higher salt contents can be handled without problems or in the case of cooling water treatment higher cycles of concentration are possible. So blowdown can be lowered and less chemicals are needed, which saves money but also a smaller amount of water treatment chemicals is blown down into the environment.

The water treatment chemicals which can be combined with carbondioxide include (a) water soluble polymers, (b) phosphonates and (c) other water treatment chemicals which can be used as scale and or corrosion inhibitors.

Our invention can be used in a variety of different water treatment applications : cooling water treatment, process water treatment and waste water treatment for example.

Besides corrosion and or scale inhibitors, biocides, antifoaming agents, biodispersants and, tensioactive molecules, for example, may also be used in this technique.

The carbondioxide can be supplied to the water in any form, whether it is a gas, solid or liquid. The carbondioxide can also be supplied from a wide range of sources : combustion gases or, carbondioxide in containers for example. The gas can also be generated through decomposition of carbondioxide releasing chemicals or by the action of mineral or organic acids on carbondioxide releasing chemicals such as calciumcarbonate. If the carbondioxide is not clean enough, it can be purified by filters, or in the case of combustion gases from heavy fuel oil, freed from $SO_3$ through condensation. The $SO_2$ present in combustion gases of sulfur con-

taining fuels can be used as biocide. The carbondioxide pH regulation may also be combined with classical pH regulation with mineral acids such as sulfuric or hydrochloric acid, or organic acids. The strong mineral acid can be formed in situ for example if $SO_3$ resulting from combustion of sulfuur containing fuels is led into the water together with the carbondioxide.

The carbondioxide may be mixed with the water by several means : it can be blown into the water by a ventilator : the carbondioxide can be dosed directly in the water or mixed with the air entering the cooling tower. Another very effective method consists in mixing the carbondioxide with water by means of a venturi system, if desired mixed in two successive steps. Any other mixing technique however may be used.

The water soluble polymers may be of any kind. The only prerequisite is that they have calciumcarbonate stabilizing and or anticorrosive properties, alone or in combination with other chemicals. They may be prepared from anionic, non ionic, cationic or betaine containing monomers or mixtures thereof.

Examples of anionic monomers are : acrylic acid, methacrylic acid, maleic acid, itaconic acid, 3-acrylamido-3-methyl-butanoic acid, sulfonate containing monomers such as vinylsulfonic acid, methallysulfonic acid, 2-acrylamido-2-methylpropanesulfonic acid, allylhydroxypropylsulfonate ether, styrenesulfonic acid, sulphate containing monomers such as the sulphate ester of hydroxypropyl (meth)acrylate, phosphonate containing monomers such as 2-acrylamido-2-methylpropanephosphonic acid and isoproprenylphosphonic acid, phosphate containing monomers such as allyl-2-hydroxypropylphosphate ether.

Examples of non ionic monomers are acrylamide, t-butylacrylamide, acrylonitrile, maleic anhydride, vinylacetate,vinylalcohol, allylalcohol, esters of acrylic and methacrylic acid such as ethylacrylate and methylmethacrylate, hydroxyethylacrylate, 2-hydroxypropylacrylate, hydroxyethylmethacrylate, allylamine, vinylamine, polyalkylene glycol (meth)acrylate.

Betaine containing monomers such as N-methacroyloxyethy-N-(3-sulfopropyl)-N,N-dimethylammonium betaine, N-methacryloxyethyl-N-(3-phosphonopropyl)-N, N-dimethylammonium betaine, N-methacroyloxyethy-N- (3-sulfatopropyl)-N,N-dimethylammonium betaine, N-methacroyloxyethy-N-(3-phosphatopropyl)-N, N-dimethylammonium betaine.

Examples of cationic monomers are dimethyl diallyl ammoniumchloride, diethyldiallyl ammonium chloride, methacryloyloxyethyl trimethyl ammonium chloride. European patent application 0 181 151 gives an extensive list of which can be used cationic polymers.

Besides the above mentioned monomers the polymers may also contain other groups such as phosphonate, sulfonate or sulfate end groups or phosphino groups.

Mixtures of different polymers are also included in the invention.

The phosphonates may also be of any kind as long as they have antiprecipitant and or anticorrosive properties. The most well known phosphonates are nitrilotrimethylenephosphonic acid, hydroxyethylidenediphosphonic acid, phosphonobutanetricarboxylic acid and 2,2-hydroxyphosphono-acetic acid. Mixtures of different phosphonates can also be employed in the invention. European patent application 0 093 508 further gives an extensive list of suitable phosphonates.

The corrosion and scale inhibitors mentioned under (c) can be of different chemical nature. The most well known corrosion and or scale inhibitors included in (c) are :

- zinc salts
- cerous and or ceric salts
- phosphorus containing inorganic chemicals such as phosphates, phosphates, polyphosphates, orthophosphorous acid or its salts.
- silicates
- chromates
- molybdates
- lignosulfonates
- tannins
- nitrites
- organic carboxylic acids such as cycloaliphatic carboxylic acids, aliphatic carboxylic acids, aromatic or heterocyclic carboxylic acids
- polymeric diols such as polyalkyleneglycol, copolymers of ethyleneoxide and propyleneoxide, ethoxylated and or propoxylated organic molecules.
- iron complexants such as citric acid, gluconic acid, glucoheptonic acid, aminocarboxylic acids such as disodiumethanol diglycine, EDTA.
- copper corrosion inhibitors such as benzotriazole, tolyltriazole, butylbenzotriazole, 2-mercaptobenzothiazole.
- polyhydroxy compounds such as mannitol, sorbitol,
- phosphate esters such as polyol phosphate esters, alkyl acid phosphates, ethoxylated alkyl acid phosphates.

- amines such as fatty amines and or neutralizing amines

The list of the above mentioned products serves just as an illustration and should not in any way be interpreted as a limitation of the invention.

The method of this invention can also be combined with other supplementary techniques to save water, such as reverse osmosis, side stream softening, make-up softening.

The invention will be further illustrated by a few Examples. The Examples can be found in table 1 and 2. The abreviations used in these tables are given below :

Legend for table 1 and 2

| | |
|---|---|
| NTMPA : | Nitrilotrimethylenephosphonic acid |
| PBTC : | Phosphonobutanetricarboxylic acid |
| HEMA-S-AA : | copolymer sulphate ester of hydroxyethylmethacrylate (40 %)-acrylic acid (60 %) |
| o-$PO_4$ : | orthophosphate |
| AA-AMPS : | copolymer 2- acrylamido-2-methylpropanesulphonic acid (40 %)-acrylic acid (60 %) |
| Belclene 283 : | acrylate copolymer marketed by Ciba-Geigy |
| HPA : | 2,2-hydroxy-phosphono-acetic acid |
| TTZ : | Tolyltriazole |
| Versa-TL3 : | copolymer styrenesulphonate-maleic acid marketed by National Starch |
| PE-6200 : | ethylene oxide-propyleneoxide copolymer marketed by BASF |
| AA-HPA : | copolymer acrylic acid (75 %)-hydroxypropylacrylate (25 %) |
| AA-AHPSE : | copolymer acrylic acid (62 %)-allylhydroxypropylsulfonate ether (38 %) |

A simulated process water containing 1000 ppm calcium as calciumcarbonate and 1000 ppm TAC expressed as calcium-carbonate was followed as a function of time at different pH. If the pH had to be adjusted it was always done with carbondioxide : this is the case, where the pH of the solution is lower than 9. These tests were also performed in the presence of water treatment antiscalants. Tests were run at a water temperature of 60° C.

The results are brought together in table 1. This table contains also data obtained without pH correction in the absence and presence of antiprecipitants. TAC and TCa were created in the water by mixing a calciumchloride containing solution together with a sodiumbicarbonate-carbonate mixture.

From these results it can be seen that in the absence of calciumcarbonate stabilizing chemicals a pH regulation with carbondioxide is not very effective. On the other hand combined with polymers and or phosphonates as antiprecipitants very good calciumcarbonate stabilization results. This is in contrast with no pH regulation where lower TCa and TAC values already give calciumcarbonate precipitation at higher RSI values, even in the presence of a scale inhibitor.

The improvement of corrosion and scale inhibition of water treatment formulations containing water soluble polymers and or phosphonates in combination with pH regulation by means of $CO_2$ over other methods is demonstrated next.

These experiments are performed with a heat transfer unit (HTU): water under study is pumped to a reservoir of 10 1. From here the water flows to a heat exchanger (heat flux : 10 W $cm^{-2}$; water velocity : 90 cm $sec^{-1}$) and pumped back to the reservoir, where it is cooled to 30° C. In the tank air is bubbled through the water. The reservoir is equipped with a pH device which allows pH regulation by means of hydrogensulfate or carbondioxide. Deposit formation and corrosion are visually followed. The HTU test unit is also equipped with corrosion coupons and with an electrochemical measuring device. Most of the time an inhibitor is dosed to the water. The test duration always was 10 days. In the next table the results are brought together with different corrosion inhibitors under different methods of pH regulation.

From the examples it can be seen that every formulation containing water soluble polymers and or phosphonates, we have tested, performs better under $CO_2$ control than by other pH control methods. Under $CO_2$ pH regulation it is possible to run the system under higher cycles of concentration or with formulations containing a lower amount of polluting chemicals. As can be seen from the examples zinc and phosphorus and nitogen can eventually completely suppressed from water treatment formulations.

Table 1 : Scale inhibition of carbondioxide alone and in combination with water treatment chemicals and scale inhibition in the absence of pH correction, without and with treatment

| pH | TAC | TCa | $RSI_{60°C}$ | Additif | Visual appreciation of the solution |
|---|---|---|---|---|---|
| 9 | 1000 | 1000 | 1.7 | none | heavy precipitation immediately after mixing the solutions |
| 8.5 | 1000 | 1000 | 2.2 | none | heavy precipitation immediately after mixing the solutions |
| 8 | 1000 | 1000 | 2.7 | none | heavy precipitation immediately after mixing the solutions |
| 7.5 | 1000 | 1000 | 3.2 | none | heavy precipitation a few minutes after mixing the solutions |
| 7 | 1000 | 1000 | 3.7 | none | heavy precipitation half an hour after mixing the solutions |
| 9 | 1000 | 1000 | 1.7 | polyacrylate(10ppm) PBTC(5ppm) NTMPA(3.5ppm) | heavy precipitation immediately after mixing the solutions |
| 8.5 | 1000 | 1000 | 2.2 | idem | slight precipitation one hour after mixing the solutions |
| 8.25 | 1000 | 1000 | 2.35 | idem | no precipitation one hour after mixing the solutions |
| 8 | 1000 | 1000 | 2.7 | idem | no precipitation one hour after mixing the solutions |
| 7.5 | 1000 | 1000 | 3.2 | idem | no precipitation one hour after mixing the solutions |
| 7 | 1000 | 1000 | 3.7 | idem | no precipitation one hour after mixing the solutions |
| 9 | 800 | 500 | 2.5 | none | heavy precipitation immediately after mixing the solutions |
| 9 | 800 | 500 | 2.5 | polyacrylate(10ppm) PBTC(5ppm) NTMPA(3.5ppm) | heavy precipitation half an hour after mixing the solutions |

Table 2 : Corrosion and scale inhibition of different formulations under different pH regulation methods

| Water composition | | | | | pH method | | | Corrosion (mpy) | | | Scale formation on heat exchanger | Inhibitor |
|---|---|---|---|---|---|---|---|---|---|---|---|---|
| TCa | TAC | pH | TH | TDS ($\mu S\ cm^{-1}$) | none | $H_2SO_4$ | $CO_2$ | coupon | electr. | exchanger visual appreciation | | |
| 800 | 500 | 8.8 | 1000 | 2500 | * | | | 2 | 1.5 | slight corrosion | very heavy scale formation | none |
| 800 | 500 | 8.8 | 1000 | 2500 | * | | | 2 | 1 | corroded | heavy scale formation | NTMPA(3.5ppm) PBTC(5ppm) HEMA-S-AA(10ppm) |
| 800 | 500 | 8.5 | 1000 | 2500 | | | * | <1 | 0.7 | no corrosion | completely free of deposits | NTMPA(3.5ppm) PBTC(5ppm) HEMA-S-AA(10ppm) |
| 800 | 350 | 8.5 | 1000 | 2500 | | * | | 4 | 3 | corroded | no scale formation | NTMPA(3.5ppm) PBTC(5ppm) HEMA-S-AA(10ppm) |
| 900 | 700 | 9.3 | 1000 | 3500 | * | | | <1 | 0.8 | no corrosion | heavy scale formation | $o\text{-}PO_4$(3ppm) PBTC(5ppm) AMPS-AA(6.5ppm) Belclene 283(3.5ppm) |
| 900 | 700 | 8.3 | 1100 | 3500 | | | * | 1 | 0.9 | no corrosion | completely free of scale | $o\text{-}PO_4$(3ppm) PBTC(5ppm) AMPS-AA(6.5ppm) Belclene 283(3.5ppm) |
| 900 | 200 | 8.3 | 1100 | 3500 | | * | | 6 | 5 | heavy corrosion | free of $CaCO_3$ | $o\text{-}PO_4$(3ppm) PBTC(5ppm) AMPS-AA(6.5ppm) Belclene 282(3.5ppm) |
| 2000 | 1000 | 7 | 2400 | 6500 | | | * | 1 | 0.7 | no corrosion | free of deposits | $o\text{-}PO_4$(15ppm) PBTC(5ppm) AMPS-AA(10ppm) |
| 2000 | 50 | 7 | 2400 | 6500 | | * | | 50 | 40 | very heavy corrosion | iron oxide deposits | $o\text{-}PO_4$(15ppm) PBTC(5ppm) AMPS-AA(10ppm) |
| 1200 | 750 | 9.3 | 1500 | 4500 | * | | | <1 | 0.6 | no corrosion | heavy scale formation | PBTC(5ppm) HEMA-S-AA(10ppm) HPA(2.5ppm) TTZ(2ppm) |

Table 2: continued

| | | | | | | | | | | | | |
|---|---|---|---|---|---|---|---|---|---|---|---|---|
| 1200 | 750 | 8.3 | 1500 | 4500 | | | * | <1 | 0.6 | no corrosion | no deposits | PBTC(5ppm) HEMA-S-AA(10ppm) HPA(2.5ppm) TTZ(2ppm) |
| 1200 | 200 | 8.3 | 1500 | 4500 | | * | | 7 | 6 | heavy corrosion | no $CaCO_3$ deposits | PBTC(5ppm) HEMA-S-AA(10ppm) HPA(2.5ppm) TTZ(2ppm) |
| 900 | 700 | 9.3 | 1100 | 3500 | * | | | <1 | 0.7 | no corrosion | heavy scale formation | PBTC(5ppm) AA-AMPS(6.5ppm) Belclene 283(3.5ppm) HPA(3.5ppm) TTZ(1ppm) |
| 900 | 700 | 8.3 | 1100 | 3500 | | | * | <1 | 0.6 | no corrosion | no scaling | PBTC(5ppm) AA-AMPS(6.5ppm) Belclene 283(3.5ppm) HPA(3.5ppm) TTZ(1ppm) |
| 900 | 210 | 8.3 | 1100 | 3550 | | * | | 4.5 | 3 | corroded | no $CaCO_3$ scaling | PBTC(5ppm) AA-AMPS(6.5ppm) Belclene 283(3.5ppm) HPA(3.5ppm) TTZ(1ppm). |
| 800 | 500 | 9 | 1000 | 2500 | * | | | <1 | 0.6 | no corrosion | heavy scale formation | zinc(1ppm) PBTC(5ppm) NTMPA(3.5ppm) HEMA-S-AA(10ppm) |
| 800 | 500 | 8.3 | 1000 | 2500 | | * | | <1 | 0.5 | no corrosion | no deposits | zinc(1ppm) PBTC(5ppm) NTMPA(3.5ppm) HEMA-S-AA(10ppm) |
| 800 | 200 | 8.3 | 1000 | 2500 | | * | | 4 | 3.5 | corroded | no $CaCO_3$ deposits | zinc(1ppm) PBTC(5ppm) NTMPA(3.5ppm) HEMA-S-AA(10ppm) |
| 1200 | 750 | 8.5 | 1500 | 4500 | | | * | <1 | 0.5 | no corrosion | no scaling | zinc(0.5ppm) PBTC(5ppm) NTMPA(2ppm) AMPS-AA(6.5ppm) Belclene 283(3.5ppm) |

Table 2: continued

| | | | | | | | | | | | | |
|---|---|---|---|---|---|---|---|---|---|---|---|---|
| 1200 | 350 | 8.5 | 1500 | 4500 | | * | | 5.5 | 4.7 | corroded | no $CaCO_3$ deposits | zinc(0.5ppm)<br>PBTC(5ppm)<br>NTMPA(2ppm)<br>AMPS-AA(6.5ppm)<br>Belclene 283(3.5ppm) |
| 2000 | 1000 | 8 | 2500 | 6500 | | | * | 1.5 | 1 | no corrosion | no scale formation | HPA(7ppm)<br>PBTC(6ppm)<br>AA-AMPS(10ppm)<br>Belclene 283(2ppm)<br>TTZ(1ppm) |
| 2000 | 150 | 8 | 2500 | 6500 | | * | | 11 | 9 | heavy corrosion | free of $CaCO_3$ | HPA(7ppm)<br>PBTC(6ppm)<br>AA-AMPS(10ppm)<br>Belclene 283(2ppm)<br>TTZ(1ppm) |
| 2000 | 1000 | 7.5 | 2500 | 6500 | | | * | 1.2 | 0.8 | no corrosion | no fouling | o-$PO_4$(7ppm)<br>PBTC(6ppm)<br>AA-AMPS(5ppm)<br>HPA(3.5ppm)<br>Versa TL-3(2ppm)<br>TTZ(1ppm) |
| 2000 | 80 | 7.5 | 2500 | 6500 | | * | | 19 | 16 | heavy corrosion | free of $CaCO_3$ | o-$PO_4$(7ppm)<br>PBTC(6ppm)<br>AA-AMPS(5ppm)<br>HPA(3.5ppm)<br>Versa TL-3(2ppm)<br>TTZ(1ppm) |
| 900 | 700 | 9.2 | 1100 | 3500 | * | | | 2 | 1 | no corrosion | heavy scaling | PBTC(5ppm)<br>AA-AMPS(10ppm)<br>Lignosulphonate(5ppm)<br>TTZ(3ppm) |
| 900 | 700 | 9.3 | 1100 | 3500 | * | | | 1.3 | 1 | no corrosion | heavy scale formation | PBTC(5ppm)<br>AA-AMPS(10ppm)<br>Lignosulphonate(5ppm)<br>TTZ(3ppm) |
| 900 | 350 | 8.5 | 1100 | 3500 | | * | | 7 | 5.5 | heavy corrosion | no $CaCO_3$ formation | PBTC(5ppm)<br>AA-AMPS(10ppm)<br>Lignosulphonate(5ppm)<br>TTZ(3ppm) |

Table 2: continued

| | | | | | | | | | | | |
|---|---|---|---|---|---|---|---|---|---|---|---|
| 900 | 700 | 8.5 | 1100 | 3500 | | * | 2.1 | 1.6 | slightly corroded | no scaling | PBTC(5ppm)<br>AA-AMPS(10ppm)<br>Lignosulfonate(5ppm)<br>TTZ(3ppm) |
| 900 | 350 | 8.5 | 1100 | 3500 | * | | 6.5 | 6 | heavy corrosion | no scaling | PBTC(5ppm)<br>AA-AMPS(10ppm)<br>Lignosulphonate(5ppm)<br>PE-6200((ppm)<br>TTZ(3ppm) |
| 900 | 700 | 8.5 | 1100 | 3500 | | * | 1.7 | 1.1 | very slight corrosion | no scaling | PBTC(5ppm)<br>AA-AMPS(10ppm)<br>Lignosulphonate(5ppm)<br>PE-6200(5ppm)<br>TTZ(3ppm) |
| 900 | 350 | 8.5 | 1100 | 3500 | * | | 7 | 5.7 | heavy corrosion | no scaling | PBTC(5ppm)<br>AA-AMPS(10ppm)<br>Lignosulphonate(5ppm)<br>$Na_2SiO_3$(5ppm)<br>TTZ(3ppm) |
| 900 | 700 | 8.5 | 1100 | 3500 | | * | 1.2 | 0.9 | very slight corrosion | no scaling | PBTC(5ppm)<br>AA-AMPS(10ppm)<br>Lignosulphonate(5ppm)<br>$Na_2SiO_3$(5ppm)<br>TTZ(3ppm) |
| 900 | 200 | 8.2 | 1100 | 3500 | * | | 10 | 11 | heavy corrosion | no scaling | AA-HPA(7.5ppm)<br>AA-AMPS(7.5ppm)<br>Lignosulphonate(5ppm)<br>$Na_2SiO_3$(5ppm)<br>TTZ(3ppm) |
| 900 | 700 | 8.2 | 1100 | 3500 | | * | 1.8 | 1.6 | very slight corrosion | no scaling | AA-HPA(7.5ppm)<br>AA-AMPS(7.5ppm)<br>Lignosulphonate(5ppm)<br>$Na_2SiO_3$(5ppm)<br>TTZ(3ppm) |
| 900 | 700 | 8.2 | 1100 | 3500 | * | | 9 | 7 | heavy corrosion | no scaling | AA-HPA(7.5ppm)<br>AA-AHPSE(7.5ppm)<br>Lignosulfonate(5ppm)<br>$Na_2SiO_3$(5ppm)<br>TTZ(3ppm) |

Table 2: continued

| | | | | | | | | | | |
|---|---|---|---|---|---|---|---|---|---|---|
| 900 | 700 | 8.2 | 1100 | 3500 | * | 3 | 2 | slight corrosion | no scaling | AA-HPA(7.5ppm)<br>AA-AHPSE(7.5ppm)<br>Lignosulfonate(5ppm)<br>$Na_2SiO_3$(5ppm)<br>TTZ(3ppm) |

## Claims

1. A method of treating an aqueous system thereby to reduce corrosion and/or scaling which comprises incorporating in the system an agent which controls corrosion and/or scaling characterised by regulating the pH of the system to a value which is at least 7 but less than 9 using carbon dioxide so as to enhance the effectiveness of the agent and maintaining the TAC value (m-alkalinity) at 500 to 1000 ppm expressed as calcium carbonate.

2. A method according to claim 1 in which the pH is regulated to 7 to 8.5.

3. A method according to claim 1 or 2 in which the agent is one or more of the following:
   (a) a water soluble polymer
   (b) a water soluble phosphonate
   (c) a chemical which is a zinc salt, an inorganic phosphorus containing compound, a cerous or ceric salt, a chromate, a molybdate, a lignosulfonate, a tannin, a nitrite, an organic carboxylic acid, a polymeric diol, an iron complexant, a copper corrosion inhibitor, a polyhydroxy compound, a phosphate ester or an amine
   (d) a water soluble silicate.

4. A method according to any one of the preceding claims in which a part of the carbon dioxide is replaced by an inorganic and/or an organic acid.

5. A method according to any one of the preceding claims in which the carbon dioxide is generated by the decomposition of carbon dioxide releasing chemicals.

6. A method according to any one of claims 3 to 5 in which the polymer contains one of the following groups: phosphonate, sulfonate, sulfate or phosphate.

7. A method according to any one of claims 3 to 5 in the polymer contains phosphinic acid groups.

8. A method according to any one of claims 3 to 5 in which the polymer has calcium carbonate stabilising and/or anticorrosive properties, alone or in combination with one or more of the other chemicals mentioned in paragraph (c).

9. A method according to any one of claims 3 to 8 in which the phosphonate has calciumcarbonate stabilizing and/or anticorrosive properties, alone or in combination with one or more of the chemicals mentioned in paragraph (c).

10. A method according to any one of the preceding claims in which the system also has incorporated therein one or more of the following components: biocides, surface active agents, antifoaming agents, or biodispersants.

11. A method according to any one of the preceding claims, used in combination with reverse osmosis, side stream softening, make-up softening, blowdown softening, sidestream filtration or ozone dosage.

12. A method according to any one of the preceding claims in which the aqueous system is for cooling water treatment, waste water treatment, or process water treatment.

## Patentansprüche

1. Verfahren zur Behandlung eines wäßrigen Systems um Korrosion und/oder Kesselsteinbildung zu verringern, bei dem dem System ein Mittel zugeführt wird, das Korrosion und/oder Kesselsteinbildung kontrolliert, indem der pH-Wert des Systems unter Verwendung von Kohlendioxid auf einen Wert von mindestens 7 aber weniger als 9 eingestellt wird, um die Effektivität des Mittels zu erhöhen, und der als Calciumcarbonat ausgedrückte TAG-Wert (m-Alkalinität) bei 500 bis 1000 ppm gehalten wird.

2. Verfahren nach Anspruch 1, bei dem der pH-Wert auf 7 bis 8,9 eingestellt wird.

3. Verfahren nach Anspruch 1 oder 2, bei dem das Mittel eines oder mehrere der folgenden ist:
   (a) ein wasserlösliches Polymer,
   (b) ein wasserlösliches Phosphonat,
   (c) eine chemische Substanz, die ein Zinksalz, eine anorganische Phosphor enthaltende Verbindung, ein Cer(III)-oder Cer(IV)-Salz, ein Chromat, ein Molybdat, ein Lignosulfonat, ein Tannin, ein Nitrit, eine organische Carbonsäure, ein polymeres Diol, ein Eisenkomplexierungsmittel, ein Kupferkorrosionsinhibitor, eine Polyhydroxyverbindung, ein Phosphatester oder ein Amin,
   d) ein wasserlösliches Silikat.

4. Verfahren nach eine der vorhergehenden Ansprüche, bei dem ein Teil des Kohlendioxids durch eine anorganische und/oder eine organische Säure ersetzt wird.

5. Verfahren nach einem der vorhergehenden Ansprüche, bei dem das Kohlendioxid durch die Zersetzung von Kohlendioxid freisetzenden Chemikalien erzeugt wird.

6. Verfahren nach einem der Ansprüche 3 bis 5, bei dem das Polymer eine der folgenden Gruppen enthält: Phosphonat, Sulfonat, Sulfat ode Phosphat.

7. Verfahren nach einem der Ansprüche 3 bis 5, bei dem das Polymer Phosphinsäuregruppen entält.

8. Verfahren nach einem der Ansprüche 3 bis 5, bei dem das Polymer allein oder in Kombination mit einer oder mehreren der anderen in Absatz (c) genannten Chemikalien Calciumcar bonat stabilisierende und/oder antikorrosive Eigenschaften aufweist.

9. Verfahren nach einem der Ansprüche 3 bis 8, bei dem das Phosphonat allein oder in Kombination mit einer oder mehreren der in Absatz (c) genannten Chemikalien Calciumcarbonat stabilisierende und/oder antikorrosive Eigenschaften aufweist.

10. Verfahren nach einem der vorhergehenden Ansprüche, bei dem das System außerdem eingeführt darin, eine oder mehrere folgenden Komponenten aufweist: Biozide, Tenside, Antischaummittel oder Biodispergiermittel.

11. Verfahren nach einem der vorhergehenden Ansprüche, das in Kombination mit Umkehrosmose, Seitenstromenthärtung, Verlustausgleichsenthärtung, Abschlämmerweichung, Seitenstromfiltration oder Ozondosierung angewendet wird.

12. Verfahren nach einem der vorhergehenden Ansprüche, bei dem das wäßrige System zur Kühlwasserbehandlung, Abwasserbehandlung oder Verfahrenswasserbehandlung bestimmt ist.

**Revendications**

1. Méthode de traitement d'un système aqueux pour réduire par là la corrosion et/ou l'écaillage qui comprend l'incorporation dans le système d'un agent qui contrôle la corrosion et/ou l'écaillement, caractérisée par la régulation du pH du système à une valeur qui est au moins inférieure à 9 en utilisant du dioxyde de carbone de façon à augmenter l'efficacité de l'agent et le maintien de la valeur TAC (m-alcalinité) à 500 à 1000 ppm exprimés en carbonate de calcium.

2. Méthode selon la revendication 1, dans laquelle le pH est régulé à 7 à 8,5.

3. Méthode selon la revendication 1 ou 2, dans laquelle l'agent est un ou plus des suivants :
   a) un polymère soluble dans l'eau
   (b) un phosphonate soluble dans l'eau
   (c) un produit chimique qui est un sel de zinc, un composé contenant du phosphore inorganique, un sel céreux ou cérique, un chromate, un molybdate, un lignosulfonate, un tannin, un nitrite, un acide carboxylique organique, un diol polymérique, un complexant du fer , un inhibiteur de corrosion de cuivre, un composé polyhydroxy, un ester de phosphate ou une amine.
   (d) un silicate soluble dans l'eau.

4. Méthode selon l'une quelconque des revendications précédentes dans laquelle le dioxyde de carbone est

remplacé par un acide inorganique et/ou organique.

5. Méthode selon l'une quelconque des revendications précédentes, dans laquelle le dioxyde de carbone est généré par la décomposition des produits chimiques libérant du dioxyde de carbone.

6. Méthode selon l'une quelconque des revendications 3 à 5, dans laquelle le polymère contient un des groupes suivants : phosphonate, sulfonate, sulfate ou phosphate.

7. Méthode selon l'une quelconque des revendications 3 à 5, dans laquelle le polymère contient des groupes acides phosphoniques.

8. Méthode selon l'une quelconque des revendications 3 à 5, dans laquelle le polymère a des propriétés de stabilisation du carbonate de calcium et/ou d'anticorrosion, seul ou en combinaison avec un ou plusieurs des autres produits chimiques mentionnés au paragraphe (c).

9. Méthode selon l'une quelconque des revendications 3 à 8, dans laquelle le phosphate a des propriétés de stabilisation de carbonate de calcium et/ou d'anticorrosion, seul ou en combinaison avec un ou plus des produits chimiques mentionnés au paragraphe (c).

10. Méthode selon l'une quelconque des revendications précédentes, dans laquelle le système a également incorporé à l'intérieur un ou plus des composants suivants : biocides, agents actifs de surface, agents antimousse, ou biodispersants.

11. Méthode selon l'une quelconque des revendications précédentes, utilisée en combinaison avec une osmose inverse, un adoucissement à courant latéral, un adoucissement par construction, un adoucissement par souffle vers le bas, une filtration par courant latéral ou un dosage d'ozone.

12. Méthode selon l'une quelconque des revendications précédentes, dans laquelle le système aqueux est pour le traitement de l'eau de refroidissement, le traitement de l'eau d'évacuation, ou le traitement de l'eau de procédé.